# EUROPEAN PATENT APPLICATION

(11) **EP 4 742 180 A1**
(43) Date of publication of application: **13.05.2026**
(21) Application number: 25214482.9
(22) Date of filing: 08.11.2025
(51) Int. Cl.: G06V 10/764, G06V 10/82, G06V 20/52, G06V 40/10

(54) **LYING POSITION DETECTION OF A PERSON IN BED WITH COMPUTER VISION**

(30) Priority: 08.11.2024 US 202463718292 P
(71) Applicant: Kepler Vision Technologies B.V., 1098 HX Amsterdam (NL)
(72) Inventor: van de Sande, Koen Erik Adriaan, 1098 XH Amsterdam (NL); Stokman, Henricus Meinardus Gerardus, 1098XH Amsterdam (NL); van Oldenborgh, Marc Jean Baptist, 1098 XH Amsterdam (NL)
(74) Representative: Patent Business B.V.

(57) **Abstract**

There is provided a method for detecting in an image a lying position of a person in a lying area with a computing device, the computing device comprising a computer program product, wherein the computer program product when running on the data processor causes the computing device to retrieve the image from the input source as image data, analyze the image data, the analyzing comprising: input the image data to a first machine learning model, the first machine learning model detecting the lying area in the image data, transpose the lying area in the predefined position as a transposed lying area, input the transposed lying area to a second machine learning model, the second machine learning model detecting the lying position of the person in the lying area in the transposed lying area, and to output the lying position of the person in the lying area.

## Description

### TECHNICAL FIELD

The invention relates to detecting the lying position of a person, in particular the lying position of a person in bed, from one or more images with the use of artificial intelligence and computer vision.

### BACKGROUND

Artificial intelligence (AI) is developing rapidly. AI applications are supporting or will support all industries including the aerospace industry, agriculture, chemical industry, computer industry, construction industry, defense industry, education industry, energy industry, entertainment industry, financial services industry, food industry, health care industry, hospitality industry, information industry, manufacturing, mass media, mining, telecommunication industry, transport industry, water industry and direct selling industry.

The ability to monitor and/or control systems is an area wherein AI can be very useful. Another area is the understanding of human behavior and interaction. To do that, AI systems should be able to detect and recognize events in real-time. This requires a smart approach using software, such as deep neural networks, and powerful computer hardware to execute computations within milliseconds.

Computer vision is an area of artificial intelligence (AI) wherein machine learning is used to classify or categorize scenes in images of living beings and objects. The science of computer vision seeks to understand what can be seen and what is happening in an image or series of images such as a photo picture, a video, or a live stream by use of a computing device.

In particular, the field of care continually faces escalating challenges due to the lack of staff to monitor patients. For instance, monitoring the lying position of patients developing bed sores is crucial. Turning these patients regularly prevents pressure ulcers or decubitus that would severely deteriorate patients' quality of life.

Traditionally, care workers need to keep track of a patient's lying position by themselves and turn the patient at regular time intervals. A task that requires dedicated observation and keeping track of the duration a patient is at a certain lying position. This is a labor-intensive job and prone to errors in an environment wherein a care worker is easily distracted by other patients and emergencies.

To address the challenge of lack of staff and still provide sufficient and reliable monitoring, automatic detection of a person's lying position with AI can provide significant assistance to care workers.

United States patent No. 11,967,101, titled "Method and system for obtaining joint positions, and method and system for motion capture", according to its abstract describes "The present invention provides a motion capture with a high accuracy which can replace an optical motion capture technology, without attaching optical markers and sensors to a subject. A subject with an articulated structure has a plurality of feature points in the body of the subject including a plurality of joints wherein a distance between adjacent feature points is obtained as a constant. A spatial distribution of a likelihood of a position of each feature point is obtained based on a single input image or a plurality of input images taken at the same time. One or a plurality of position candidates corresponding to each feature point are obtained based on the spatial distribution of the likelihood of the position of each feature point. Each join angle is obtained by performing an optimization calculation based on inverse kinematics using the candidates and the articulated structure. Positions of the feature points including the joints are obtained by performing a forward kinematics calculation using the joint angles."

United States patent No. 12,112,541, titled "Bed system", according to its abstract describes "A bed system includes: an imaging device; a bed on which the imaging device is to be installed; and a controller configured to process an image acquired by the imaging device to predict a possibility of overturning of a user, in which, when it is determined that a state of the user is a first state, the controller predicts the possibility of overturning of the user based on a first parameter, when it is determined that the state of the user is a second state, the controller predicts the possibility of overturning of the user based on a second parameter, the first state is a state of the user different from the second state, and the first parameter is different from the second parameter." In "A Vision-Based System for In-Sleep Upper-Body and Head Pose Classification", January 2018, by Yan-Ying Li et al,(https://www.ncbi.nlm.nih.gov/pmc/articles/PMC8914692/#B33-sensors-22-02014), according to its abstract describes "Sleep quality is known to have a considerable impact on human health. Recent research shows that head and body pose play a vital role in affecting sleep quality. This paper presents a deep multi-task learning network to perform head and upper-body detection and pose classification during sleep. The proposed system has two major advantages: first, it detects and predicts upper-body pose and head pose simultaneously during sleep, and second, it is a contact-free home security camera-based monitoring system that can work on remote subjects, as it uses images captured by a home security camera. In addition, a synopsis of sleep postures is provided for analysis and diagnosis of sleep patterns. Experimental results show that our multi-task model achieves an average of 92.5% accuracy on challenging datasets, yields the best performance compared to the other methods, and obtains 91.7% accuracy on the real-life overnight sleep data. The proposed system can be applied reliably to extensive public sleep data with various covering conditions and is robust to real-life overnight sleep data."

### SUMMARY

The current invention introduces a method, an apparatus or device, and a system for detecting the lying of a person, in particular the lying position of a person in bed with the use of AI and computer vision.

To prevent a person from lying too long in the same position is particularly important when the person is suffering from pressure sores.

Therefore, it is crucial to measure the duration a person is in the same lying position. To execute this task, the use of AI technology can be very helpful.

The current invention introduces a new method to train and run machine learning models supporting the detection of a lying position of a person in image data.

Instead of applying a machine learning model on the image data 'as is' the new method deducts the area where the person is lying as a lying area. This lying area is then transposed in a predefined position. The transposition can be a rotation of the lying area, in particular, in a horizontal or vertical position.

This allows more efficient training of a machine learning model. With fewer samples a higher accuracy can be reached.

This allows a machine learning model to demand fewer CPU/GPU resources when used for detecting a lying position of a person.

Therefore, the current invention significantly lowers the bar for local AI on-device integrations. For example, image-capturing devices can become smart image-capturing sensors. Such sensors can themselves infer captured image data and output the result without outputting the original image data to another system for inferencing. This enhances the privacy of the person whose lying position is monitored.

To that end, there is provided a method for detecting in an image a lying position of a person in a lying area with a computing device, the computing device comprising:
an input source;
a data processor, and
a computer program product comprising:
   - a first machine learning model trained for detecting a lying area in image data, and
   - a second machine learning model trained for detecting a lying position of a person in the lying area that is transposed in a predefined position,
wherein the computer program product when running on the data processor causes the computing device to:
   - retrieve the image from the input source as image data;
   - analyze the image data, the analyzing comprising:
      - input the image data to the first machine learning model;
      - the first machine learning model detecting the lying area in the image data;
      - transpose the lying area in the predefined position as a transposed lying area;
      - input the transposed lying area to the second machine learning model;
      - the second machine learning model detecting the lying position of the person in the lying area in the transposed lying area, and
   - output the lying position of the person in the lying area.

A predefined position is a position of the lying area on which the second machine learning model is trained.

There is further provided a method for detecting in an image a lying position of a person in the lying area, wherein the lying position of the person is categorized into three categories: person-lying-on-their-back, person-lying-on-their-left-side, and person-lying-on-their-right-side.

There is further provided a method for detecting in an image a lying position of a person in a lying area, wherein the transposed lying area is either the lying area rotated in a horizontal position or vertical position. A lying area can comprise a bed or bed area, a couch or couch area, a carpet or carpet area, and a part of a floor in which a person is lying or floor area.

There is further provided a method for detecting in an image a lying position of a person in a lying area, wherein the lying area is selected from a bed in a bed area, a couch in a couch area, a carpet in a carpet area, and a part of a floor in a floor area.

There is furthermore provided a method for detecting in an image a lying position of a person in a lying area, wherein the computer program product when running on the data processor in addition causes the computing device to:
- store an occurrence of a first output of the lying position with a timestamp;
- measure, with time intervals, the time elapsed since the timestamp as a duration;
- output a signal when the duration exceeds a predefined threshold, and
when an occurrence of a subsequent output of the lying position differs from the first output of the lying position:
- store the occurrence of the subsequent output of the lying position, and
- reset the timestamp to the time of the occurrence of the subsequent output.

In an embodiment, there is provided a device configured to detect a lying position of a person in a lying area, the device comprising a common housing holding:
an image-capturing sensor outputting image data;
a computing device comprising a data processor, and
a computer program product comprising:
   - a first machine learning model trained for detecting a lying area in image data, and
   - a second machine learning model trained for detecting a lying position of a person in the lying area that is transposed in a predefined position,
wherein the computer program product when running on the data processor causes the computing device to:
   - receive the image data from the image-capturing sensor;
   - analyze the image data, the analyzing comprising:
      - . input the image data to the first machine learning model;
      - . the first machine learning model detecting the lying area in the image data;
      - . transpose the lying area in the predefined position as a transposed lying area;
      - . input the transposed lying area to the second machine learning model;
      - . the second machine learning model detecting the lying position of the person in the lying area, in the transposed lying area, and
   - output the lying position of the person in the lying area.

There is further provided a device configured to detect a lying position of a person in a lying area, wherein the lying position of the person is categorized into three categories: person-lying-on-their-back, person-lying-on-their-left-side, and person-lying-on-their-right-side.

There is further provided a device configured to detect a lying position of a person in a lying area, wherein the transposed lying area is either the lying area rotated in a horizontal position or vertical position.

There is further provided a device configured to detect a lying position of a person in a lying area, wherein the lying area is selected from a bed in a bed area, a couch in a couch area, a carpet in a carpet area, and a part of a floor in a floor area. There is furthermore provided a device configured to detect a lying position of a person in a lying area, wherein the computer program product when running on the data processor in addition causes the computing device to:
- store an occurrence of a first output of the lying position with a timestamp;
- measure, with time intervals, the time elapsed since the timestamp as a duration;
- output a signal when the duration exceeds a predefined threshold, and
when an occurrence of a subsequent output of the lying position differs from the first output of the lying position:
- store the occurrence of the subsequent output of the lying position, and
- reset the timestamp to the time of the occurrence of the subsequent output.

In an embodiment, there is provided a computer program product for running on a computing device comprising a data processor, for detecting in image data a lying position of a person in a lying area, the computer program product comprising:
a first machine learning model trained for detecting a lying area in image data, and
a second machine learning model trained for detecting a lying position of a person in the lying area that is transposed in a predefined position,
wherein the computer program product when running on the data processor causes the computing device to:
   - receive the image data from an input source;
   - analyze the image data, the analyzing comprising:
      - input the image data to the first machine learning model;
      - the first machine learning model detecting the lying area in the image data;
      - transpose the lying area in the predefined position as a transposed lying area;
      - input the transposed lying area to the second machine learning model;
      - the second machine learning model detecting the lying position of the person in the lying area in the transposed lying area, and
   - output the lying position of the person in the lying area.

In an embodiment, there is provided a computer program product for running on a computing device comprising a data processor, for detecting in image data a lying position of a person in a lying area, the computer program product comprising:
a first machine learning model trained for detecting a lying area in image data,
a second machine learning model trained for detecting a rotation position of a person in the lying area that is transposed in a predefined position, and
a third machine learning model trained for detecting an orientation position of a lying area that is transposed in a predefined position,
wherein the computer program product when running on the data processor causes the computing device to:
   - receive the image data from an input source;
   - analyze the image data, the analyzing comprising:
      - input the image data to the first machine learning model;
      - the first machine learning model detecting the lying area in the image data;
      - transpose the lying area in the predefined position as a transposed lying area;
      - input the transposed lying area to the second machine learning model;
      - the second machine learning model detecting the rotation position of the person in the lying area in the transposed lying area;
      - input the transposed lying area to the third machine learning model;
      - the third machine learning model detecting the orientation position of the lying area in the transposed lying area area;
      - deduct the lying position of the person in the lying area in the transposed lying area from the rotation position and the orientation position, and
   - output the lying position of the person in the lying area.

There is further provided a computer program product for running on a computing device comprising a data processor, for detecting in image data a lying position of a person in a lying area, wherein the lying position of the person is categorized into three categories: person-lying-on-their-back, person-lying-on-their-left-side, and person-lying-on-their-right-side.

There is further provided a computer program product for running on a computing device comprising a data processor, for detecting in image data a lying position of a person in a lying area, wherein the transposed lying area is either the lying area rotated in a horizontal position or vertical position.

There is further provided a computer program product for running on a computing device comprising a data processor, for detecting in image data a lying position of a person in a lying area, wherein the lying area is selected from a bed in a bed area, a couch in a couch area, a carpet in a carpet area, and a part of a floor in a floor area.

There is further provided a computer program product for running on a computing device comprising a data processor, for detecting in image data a lying position of a person in a lying area, wherein the computer program product is running on a computing device that is part of an image-capturing sensor.

There is furthermore provided a computer program product for running on a computing device comprising a data processor, for detecting in image data a lying position of a person in a lying area, wherein the computer program product when running on the data processor in addition causes the computing device to:
- store an occurrence of a first output of the lying position with a timestamp;
- measure, with time intervals, the time elapsed since the timestamp as a duration;
- output a signal when the duration exceeds a predefined threshold, and
when an occurrence of a subsequent output of the lying position differs from the first output of the lying position:
- store the occurrence of the subsequent output of the lying position, and
- reset the timestamp to the time of the occurrence of the subsequent output.

An image-capturing sensor in an embodiment is a device that can provide an image or a series of images or a time series of images, in particular a digital image or digital picture as image data. Such a device can comprise a camera of a filming (motion picture) device. Examples are devices comprising a CCD or similar imaging elements. Other examples of image-capturing sensors are a photo camera, a webcam, a sonar, a RADAR, a laser, LIDAR, and an infrared camera. As such, these devices are known to a skilled person.

An image captured by an image-capturing sensor may comprise a collection of data points according to a certain data format. For example, an image may include pixels defining a 2D data format of pixel values, e.g. color values such as RGB pixel values, voxels defining a 3D data format of voxel values, a point cloud representing endpoints of vectors in a 3D reference frame and/or a 3D surface mesh.

A computer network compromise means any unauthorized access to, use or misuse of, or modification of a computer system, and/or denial of computer system resources by attacks perpetuated through malware, viruses, worms, and Trojan horses, spyware, zero-day attacks, hacker attacks, and denial of service (DoS) attacks. A computer system or computing device is a combination of hardware components and software. A computer system comprises a data processor and memory. A computer program product can be executed by or can run on a computer system.

A computer program product contains computer code that can be executed by or can run on a data processor, a central processor unit (CPU) and a graphics processor unit (GPU).

Therefore, a computer program product can be running on a computing device and can also be running on a data processor. As such, a computer program product can be executed by a computing device and can also be executed by a data processor.

A computer system or computing device is any machine for automatically executing calculations or instructions. Such a system or device might be a PC, a server, a cloud server, a locally distributed server environment, a computer cloud environment, a printed circuit board (PCB), or any circuitry for performing particular functions in an electronic device.

A computer vision system uses computer vision to 'look' into an image/picture, a video, or a live video stream that uses machine learning and classifying to understand its content. The content is provided to a computer vision system as image data.

To detect and localize a subject, a rotation of a subject, and an orientation of a subject in image data, use is made of widely used AI methods to detect subjects. Such methods will use machine learning techniques (often deep learning) to design and train one or more machine learning models that detect subjects given an input of a visual representation, e.g. an RGB image, as the system perceives. The model is trained on a large amount of annotated data that comprises images with and without annotated subjects.

A subject can be a living being or an object.

In the case of deep learning, a detection framework such as Faster-RCNN, SSD, R-FCN, Mask-RCNN, or one of their derivatives can be used. A base model structure can be VGG, AlexNet, ResNet, GoogLeNet, adapted from the previous, or a new one. A model can be initialized with weights and trained similar tasks to improve and speed up the training. Optimizing the weights of a model, in case of deep learning, can be done with the help of deep learning frameworks such as Tensorflow, Caffe, or MXNET. To train a model, optimization methods such as Adam or RMSProb can be used. Classification loss functions such Hinge Loss or Softmax Loss can be used. Other approaches that utilize handcrafted features (such as LBP, SIFT, or HOG) and conventional classification methods (such as SVM or Random Forest) can be used.

Classifying or categorizing is arranging image data in classes or categories according to shared qualities or characteristics. The action or process of classifying something results in a classification or categorization.

To determine a lying position of a person in a lying area, the classification based on the lying position of the person can be but is not limited to: person-lying-on-their-back, person-lying-on-their-right-side, person-lying-on-their-left-side, person-lying-on-their-belly-with-their-head-to-the-left, person-lying-on-their-belly-with-their-head-to-the-right-and-their-right-leg-bend, person-lying-on-their-belly-with-their-head-to-the-right-and-their-left-leg-bend, person-lying-on-their-belly-with-their-head-to-the-left-and-their-left-leg-bend, person-lying-on-their-belly-with-their-head-to-the-left-and-their-right-leg-bend, person-in-fetal-position-on-their-right-side, person-in-fetal-position-on-their-left-side, person-in-fetal-position-facing-down etc.

To determine a rotation position of a person in a lying area, the classification based on the rotation position of the person can be but is not limited to: person-on-back, person-on-belly, person-facing-up, person-facing-down, person-partially-facing-up, and person-partially-facing-down. Partially would be defined by the angle of rotation.

To determine a orientation position of a lying area, the classification based on the orientation position of the lying area such as a bed can be but is not limited to: headboard-oriented-toward-the-left, headboard-oriented-toward-the-right, headboard-oriented-toward-north, headboard-oriented-toward-south, headboard-oriented-toward-east, headboard-oriented-toward-west, and headboard-oriented-[n]-degrees (wherein [n] is the angle in a number of degrees). It is understood that a similar classification can be applied when the lying area is a carpet or a part of a floor, e.g. for a carpet: carpet-oriented-toward-north, carpet-oriented-toward-south, carpet-oriented-toward-east, carpet-oriented-toward-west, etc.

It might be clear that the described classifications can also be applied in other situations where a person is lying. For example, but not limited to, when a person is lying on a floor or a couch.

A lying person can be covered e.g. by a blanket, duvet, or sheet.

Classification of one or more subsets of data points associated with captured data may be performed using one or more machine learning algorithms and statistical classification algorithms.

Example algorithms may include linear classifiers (e.g. Fisher's linear discriminant, logistic regression, naive Bayes, and perceptron), support vector machines (e.g. least squares support vector machines), clustering algorithms (e.g. k-means clustering), quadratic classifiers, multi-class classifiers, kernel estimation (e.g. k-nearest neighbor), boosting, decision trees (e.g. random forests), neural networks, Gene Expression Programming, Bayesian networks, hidden Markov models, binary classifiers, and learning vector quantization. Other example classification algorithms are also possible.

The process of classification may involve the computing device determining, based on the output of the comparison of one or more subsets with one or more predetermined sets of data types, a probability distribution (e.g. a Gaussian distribution) of possible scene types associated with the one or more subsets. Those skilled in the art will be aware that such a probability distribution may take the form of a discrete probability distribution, continuous probability distribution, and/or mixed continuous-discrete distributions. Other types of probability distributions are possible as well.

The training procedure and data can be customized to best match the context of the content of the retrieved data. For example, to detect a bed area in image data such context may comprise a hospital room, standard bed room, a typical home , sample data of typical patterns of activity for users, absolute rules like no UDP traffic is expected, elevated attention to IP addresses from a geofenced region, etc.

For example, a pretrained deep neural network (DNN) on ImageNet, e.g. VGGNet, AlexNet, ResNet, Inception and Xception, can be adapted by taking the convolution layers from these pretrained DNN networks, and on top of them adding new layers specially designed for network intrusion recognition comprising one or more display devices, and train the network as described for the model. Additional new layers could comprise specially designed layers for different types of network intrusion. The aforementioned layers can be trained independently (along with/without the pre-trained conventional layers) or trained jointly in a multi-task fashion. For example, a dense (fully connected) layer may be used to enrich the model's perceptive characteristics or a dropout layer to identify noisy inputs, allowing subsequent layers to operate on the most relevant input characteristics

As will be appreciated by one skilled in the art, aspects of the present invention may be embodied as a system, method or computer program product. Accordingly, aspects of the present invention may take the form of an entire hardware embodiment, an entire software embodiment (including firmware, resident software, microcode, etc.) or an embodiment combining software and hardware aspects that may all generally be referred to herein as a "circuit," "module" or "system". Functions described in this disclosure may be implemented as an algorithm executed by a microprocessor of a computer. Furthermore, aspects of the present invention may take the form of a computer program product embodied in one or more computer-readable medium(s) having computer-readable program code embodied, e.g., stored, thereon.

This specification uses the term "configured" in connection with computer systems and computer program product components. For a system of one or more computer systems to be configured to perform particular operations or actions means that the system has installed on it software, firmware, hardware, or a combination of them that in operation cause the system to perform the operations or actions. For one or more computer programs to be configured to perform particular operations or actions means that the one or more computer program products include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them.

Embodiments of the subject matter described in this specification can be implemented as one or more computer program products, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively, or in addition, the program instructions can be encoded on an artificially-generated propagated signal, e.g., a machine-generated electrical, optical, or electromagnetic signal, that is generated to encode information for transmission to a suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special-purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program product, which may also be referred to or described as a program, software, a software application, an app, a module, a software module, a script, or code, can be written in any form of programming language, including compiled or interpreted languages, or declarative or procedural languages; and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program product can be deployed to be executed on one computer system or on multiple computers that are located at one site or distributed across multiple sites and interconnected by a data communication network.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program product can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of nonvolatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, embodiments of the subject matter described in this specification can be implemented on a computer having a display device, e.g., a CRT (cathode ray tube), LCD (liquid crystal display) or LED (light emitting diode) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, and workloads.

Machine learning models can be implemented and deployed using a machine learning framework, e.g., a TensorFlow framework, a Microsoft Cognitive Toolkit framework, an Apache Singa framework, or an Apache MXNet framework.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client.

Data generated at the user device, e.g., a result of the user interaction, can be received at the server from the device.

The term "statistically" when used herein, relates to dealing with the collection, analysis, interpretation, presentation, and organization of data. The analysis may be presented into visual formats like graphs, or other known graphical representations and/or tables.

It is further to be understood that the terms "module" and "component", so used, are interchangeable under appropriate circumstances and that the embodiments of the invention described herein are capable of either implementing a functionality within a module or a component.

The term "substantially" herein, such as in "substantially all emission" or in "substantially consists", will be understood by the person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of".

The term "functionally" will be understood by, and be clear to, a person skilled in the art. The term "substantially" as well as "functionally" may also include embodiments with "entirely", "completely", "all", etc. Hence, in embodiments the adjective functionally may also be removed. When used, for instance in "functionally parallel", a skilled person will understand that the adjective "functionally" includes the term substantially as explained above. Functionally in particular is to be understood to include a configuration of features that allows these features to function as if the adjective "functionally" was not present. The term "functionally" is intended to cover variations in the feature to which it refers, and which variations are such that in the functional use of the feature, possibly in combination with other features it relates to in the invention, that combination of features is able to operate or function. For instance, if an antenna is functionally coupled or functionally connected to a communication device, received electromagnetic signals that are receives by the antenna can be used by the communication device. The word "functionally" as for instance used in "functionally parallel" is used to cover exactly parallel, but also the embodiments that are covered by the word "substantially" explained above. For instance, "functionally parallel" relates to embodiments that in operation function as if the parts are for instance parallel. This covers embodiments for which it is clear to a skilled person that it operates within its intended field of use as if it were parallel.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device or apparatus claims enumerating several means, several of these means may be embodied by one and the same item of hardware. The mere fact that certain measures are recited in mutually different dependent claims does not indicate that a combination of these measures cannot be used to advantage.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment.

Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

The invention further applies to an apparatus or device comprising one or more of the characterizing features described in the description and/or shown in the attached drawings. The invention further pertains to a method or process comprising one or more of the characterizing features described in the description and/or shown in the attached drawings.

The devices or apparatus herein are amongst others described during operation. As will be clear to the person skilled in the art, the invention is not limited to methods of operation or devices in operation.

The various aspects discussed in this patent can be combined to provide additional advantages. Furthermore, some of the features can form the basis for one or more divisional applications.

### BRIEF DESCRIPTION OF DRAWINGS

Embodiments of the current invention will now be described, by way of example only, with reference to the accompanying schematic drawings (of which, are not necessarily to scale) in which corresponding reference symbols indicate corresponding parts, and in which:
FIGS **1A-1B** schematically depict embodiments of two methods for detecting in an image a lying position of a person in a lying area that is represented by a bed.
FIG. **2** schematically depicts an embodiment of a device configured to detect a lying position of a person in a lying area that is represented by a bed.
FIGS **3A-3B** schematically depict an embodiment of a computer program product for detecting in image data a lying position of a person in bed.
FIGS **4A-4B** schematically depict a further embodiment of a computer program product for detecting in image data a lying position of a person in bed.
FIGS **5A-5C** schematically depict embodiments of AI categorization of a lying position of a person in bed, a rotation position of a person in bed, and an orientation position of a bed.

### DESCRIPTION

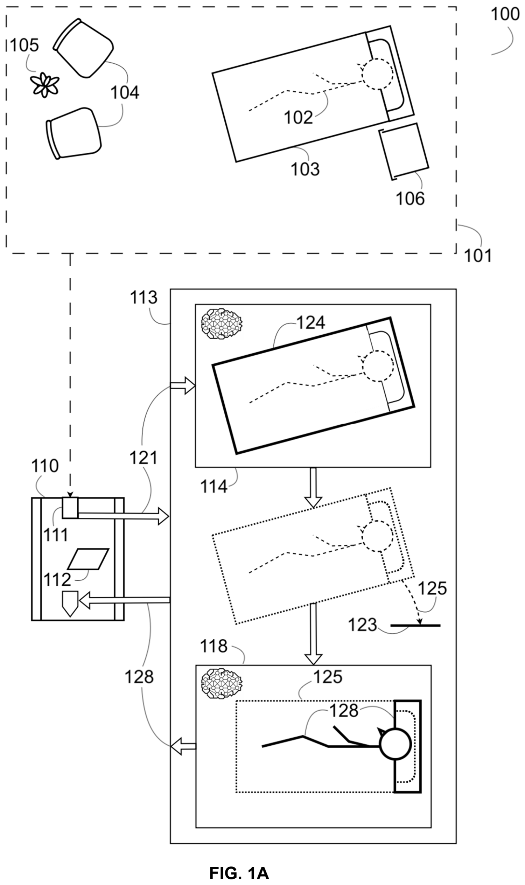

FIGS **1A-1B** schematically depict embodiments of two methods **(100** and **100')** for detecting in an image **101** a lying position **128** of a person **102** in a lying area that is represented by a bed **103** with a computing device **110.** The image **101** of a room comprises the bed **103** with the lying person **102,** two chairs **104,** a plant **105,** and a nightstand **106.** The image **101** is input for an input source **111** of a computing device **110.** FIG. **1A** schematically depicts an embodiment of the method **100** for detecting in an image **101** a lying position **128** of a person **102** in bed **103** with a computing device **110,** the computing device **110** comprising: an input source **111,** a data processor **112,** and a computer program product **113** comprising: a first machine learning model **114** trained for detecting a bed **102** in image data **121** as a bed area **124,** and a second machine learning model **118** trained for detecting a lying position **128** of a person **102** in the bed area **124** that is transposed in a predefined position **123,** wherein the computer program product **113** when running on the data processor **112** causes the computing device **110** to retrieve the image **101** from the input source **111** as image data **121,** and causes the computing device **110** to analyze the image data **121,** the analyzing comprising: input the image data **121** to the first machine learning model **114,** and the first machine learning model **114** detecting the bed area **124** in the image data **121,** and transpose the bed area **124** in the predefined position **123** as a transposed bed area **125,** and input the transposed bed area **125** to the second machine learning model **118,** and the second machine learning model **118** detecting the lying position **128** of the person **102** in bed **103** in the transposed bed area **125,** and causes the computing device **110** to output the lying position **128** of the person **102** in bed **103.**

In a further embodiment of the method **100,** the lying position **128** of the person **102** is categorized into three categories: person-lying-on-their-back, person-lying-on-their-left-side, and person-lying-on-their-right-side. In a further embodiment of the method **100,** the transposed bed area **125** is either the bed area **124** rotated in a horizontal position **123** or a vertical position **123.**

In a further embodiment of the method **100,** the bed **103** in the bed area **124** and the transposed bed area **125,** is substituted by a lying area comprising one selected from a couch in a couch area and a transposed couch area, a carpet in a carpet area and a transposed carpet area, and a part of a floor in a floor area and a transposed floor area.

In a furthermore embodiment of the method **100,** the computer program product **113** when running on the data processor **112** in addition causes the computing device **110** to:
- store an occurrence of a first output of the lying position **128** with a timestamp;
- measure, with time intervals, the time elapsed since the timestamp as a duration;
- output a signal when the duration exceeds a predefined threshold, and
when an occurrence of a subsequent output of the lying position **128** differs from the first output of the lying position **128:**
- store the occurrence of the subsequent output of the lying position **128,** and
- reset the timestamp to the time of the occurrence of the subsequent output.

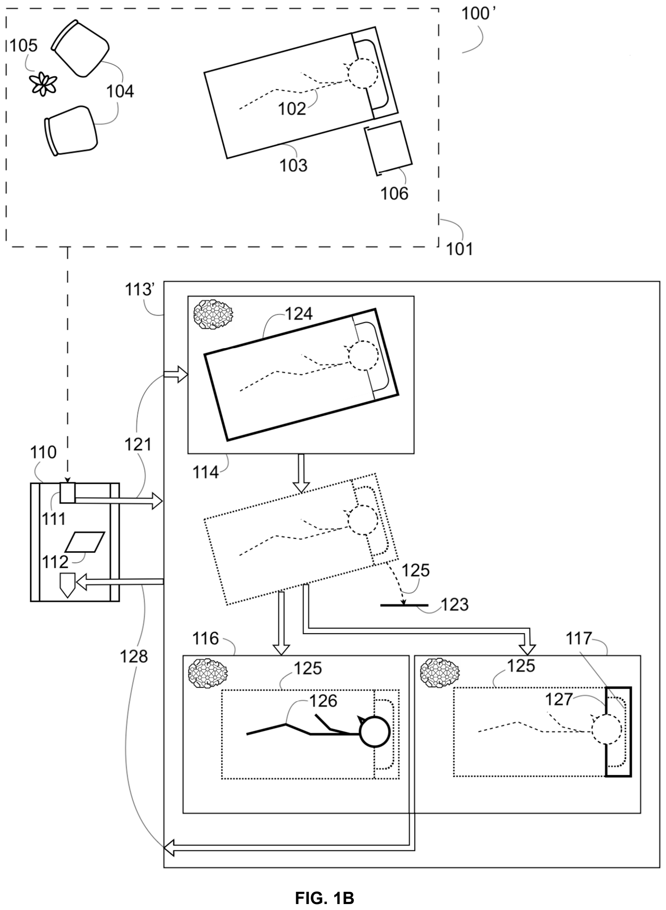

FIG. **1B** schematically depicts an embodiment of the method **100'** for detecting in an image **101** a lying position **128** of a person **102** in bed **103** with a computing device **110,** the computing device **110** comprising: an input source **111,** a data processor **112,** and a computer program product **113'** comprising: a first machine learning model **114** trained for detecting a bed **102** in image data **121** as a bed area **124,** a second machine learning model **116** trained for detecting a rotation position **126** of a person **102** in the bed area **124** that is transposed in a predefined position **123,** and a third machine learning model **117** trained for detecting an orientation position **127** of a bed **103** in the bed area **124** that is transposed in a predefined position **123,** wherein the computer program product **113'** when running on the data processor **112** causes the computing device **110** to retrieve the image **101** from the input source **111** as image data **121,** and causes the computing device **110** to analyze the image data **121,** the analyzing comprising: input the image data **121** to the first machine learning model **114,** and the first machine learning model **114** detecting the bed area **124** in the image data **121,** and transpose the bed area **124** in the predefined position **123** as a transposed bed area **125,** and input the transposed bed area **125** to the second machine learning model **116,** and the second machine learning model **116** detecting the rotation position **126** of the person **102** in bed **103** in the transposed bed area **125,** and input the transposed bed area **125** to the third machine learning model **117,** and the third machine learning model **117** detecting the orientation position **127** of the bed **103** in the transposed bed area **125,** and deduct the lying position **128** of the person **102** in bed **103** in the transposed bed area **125** from the rotation position **126** and the orientation position **127,** and causes the computing device **110** to output the lying position **128** of the person **102** in bed **103.**

In a further embodiment of the method **100'** the lying position **128** of the person **102** is categorized into at least three categories: person-lying-on-their-back, person-lying-on-their-left-side, and person-lying-on-their-right-side.

In a further embodiment of the method **100'** the transposed bed area **125** is either the bed area **124** rotated in a horizontal position **123** or a vertical position **123.**

In a further embodiment of the method **100',** the bed **103** in the bed area **124** and the transposed bed area **125,** is substituted by a lying area comprising one selected from a couch in a couch area and a transposed couch area, a carpet in a carpet area and a transposed carpet area, and a part of a floor in a floor area and a transposed floor area.

In a furthermore embodiment of the method **100',** the computer program product **113'** when running on the data processor **112** in addition causes the computing device **110** to:
- store an occurrence of a first output of the lying position **128** with a timestamp;
- measure, with time intervals, the time elapsed since the timestamp as a duration;
- output a signal when the duration exceeds a predefined threshold, and
when an occurrence of a subsequent output of the lying position **128** differs from the first output of the lying position **128:**
- store the occurrence of the subsequent output of the lying position **128,** and
- reset the timestamp to the time of the occurrence of the subsequent output.

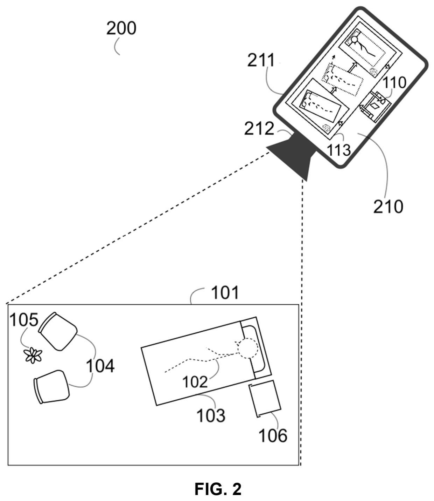

FIG. **2** schematically depicts an embodiment **200** of a device **210** configured to detect a lying position **128** (FIG. **1A****)** of a person **102** in a lying area that is represented by a bed **103.** The image **101** of a room that comprises the bed **103** with the lying person **102,** two chairs **104,** a plant **105,** and a nightstand **106,** is captured by image-capturing sensor **212** of the device **210.**

FIG. **2** schematically depicts an embodiment of the device **210** configured to detect a lying position **128** (FIG. **1A****)** of a person **102** in bed **103,** the device **210** comprising a common housing holding **211:**
an image-capturing sensor **212** outputting image data **121** (FIG. **1A****);**
a computing device **110** comprising a data processor **112** (FIG **1A****),** and
a computer program product **113** comprising:
   - a first machine learning model **114** (FIG. **1A****)** trained for detecting a bed **103** in image data **121** (FIG. **1A****)** as a bed area **124** (FIG. **1A****),** and
   - a second machine learning model **118** (FIG. **1A****)** trained for detecting a lying position **128** of a person **102** in the bed area **124** that is transposed in a predefined position **123** (FIG. **1A****),**
wherein the computer program product **113** when running on the data processor **112** causes the computing device **110** to:
   - receive the image data **121** from the image-capturing sensor **212;**
   - analyze the image data **121,** the analyzing comprising:
      - input the image data **121** to the first machine learning model **114;**
      - the first machine learning model **114** detecting the bed area **124** in the image data **121;**
      - transpose the bed area **124** in the predefined position **123** as a transposed bed area **125** (FIG. **1A****);**
      - input the transposed bed area **125** to the second machine learning model **118;**
      - the second machine learning model **118** detecting the lying position **128** of the person **102** in bed **103** in the transposed bed area **125,** and
   - output the lying position **128** of the person **102** in bed **103.**

In a further embodiment of the device **210,** the lying position **128** of the person **102** is categorized into three categories: person-lying-on-their-back, person-lying-on-their-left-side, and person-lying-on-their-right-side. In a further embodiment of the device **210,** the transposed bed area **125** is either the bed area **124** rotated in a horizontal position **123** or a vertical position **123.**

In a furthermore embodiment of the device **210,** the computer program product **113** when running on the data processor **112** in addition causes the computing device **110** to:
- store an occurrence of a first output of the lying position **128** with a timestamp;
- measure, with time intervals, the time elapsed since the timestamp as a duration;
- output a signal when the duration exceeds a predefined threshold, and
when an occurrence of a subsequent output of the lying position **128** differs from the first output of the lying position **128:**
- store the occurrence of the subsequent output of the lying position **128,** and
- reset the timestamp to the time of the occurrence of the subsequent output.

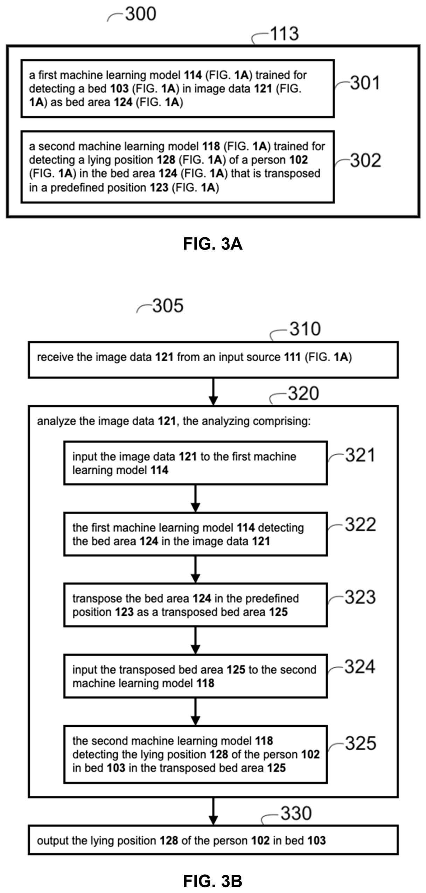

FIGS **3A-3B** schematically depicts an embodiment of a computer program product **113.**
FIG. **3A** schematically depicts in block diagram **300** an embodiment of the computer program product **113** for running on a computing device **110** (FIG. **1A****)** comprising a data processor **112** (FIG. **1A****),** for detecting in image data **121** (FIG. **1A****)** a lying position **128** (FIG. **1A****)** of a person **102** (FIG. **1A****)** in bed **103** (FIG. **1A****)**
In FIG. **3A** at block **301,** the computer program product **113** comprising: a first machine learning model **114** (FIG. **1A****)** trained for detecting a bed **103** (FIG. **1A****)** in image data **121** (FIG. **1A****)** as a bed area **124** (FIG. **1A****)** In FIG. **3A** at block **302,** the computer program product **113** comprising: a second machine learning model **118** (FIG. **1A****)** trained for detecting a lying position **128** (FIG. **1A****)** of a person **102** (FIG. **1A****)** in the bed area **124** (FIG. **1A****)** that is transposed in a predefined position **123** (FIG. **1A****)**
FIG. **3B** schematically depicts in flowchart **305** an embodiment of the computer program product **113,** wherein the computer program product **113** when running on the data processor **112** causes the computing device **110** to execute the functions in the blocks **310, 320** including **321-325,** and **330.**
In FIG. **3B** at block **310,** the computer program product **113** when running on the data processor **112** causes the computing device **110** to receive the image data **121** from an input source **111** (FIG. **1A****)**
In FIG. **3B** at block **320,** the computer program product **113** when running on the data processor **112** causes the computing device **110** to analyze the image data **121,** the analyzing comprising the operations in the blocks **321-325.**

In FIG. **3B** at block **321,** the analyzing comprising: input the image data **121** to the first machine learning model **114.**

In FIG. **3B** at block **322,** the analyzing comprising: the first machine learning model **114** detecting the bed area **124** in the image data **121.**

In FIG. **3B** at block **323,** the analyzing comprising: transpose the bed area **124** in the predefined position **123** as a transposed bed area **125.**

In FIG. **3B** at block **324,** the analyzing comprising: input the transposed bed area **125** to the second machine learning model **118.**

In FIG. **3B** at block **325,** the analyzing comprising: the second machine learning model **118** detecting the lying position **128** of the person **102** in bed **103** in the transposed bed area **125.**

In FIG. **3B** at block **330,** the computer program product **113** when running on the data processor **112** causes the computing device **110** to output the lying position **128** of the person **102** in bed **103.**

In a further embodiment of the computer program product **113,** the lying position **128** of the person **102** is categorized into three categories: person-lying-on-their-back, person-lying-on-their-left-side, and person-lying-on-their-right-side.

In a further embodiment of the computer program product **113,** the transposed bed area **125** is either the bed area **124** rotated in a horizontal position **123** or a vertical position **123.**

In a further embodiment of the computer program product **113,** the computer program product **113** is running on a on a computing device that is part of an image-capturing sensor.

In a furthermore embodiment of the computer program product **113,** the computer program product **113** when running on the data processor **112** in addition causes the computing device **110** to:
- store an occurrence of a first output of the lying position **128** with a timestamp;
- measure, with time intervals, the time elapsed since the timestamp as a duration;
- output a signal when the duration exceeds a predefined threshold, and
when an occurrence of a subsequent output of the lying position **128** differs from the first output of the lying position **128:**
- store the occurrence of the subsequent output of the lying position **128,** and
- reset the timestamp to the time of the occurrence of the subsequent output.

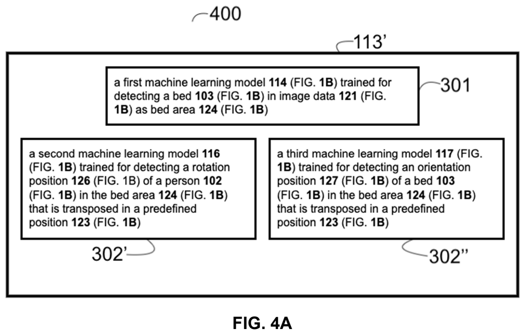

FIGS **4A-4B** schematically depicts an embodiment of a computer program product **113'.**
FIG. **4A** schematically depicts in block diagram **400** an embodiment of the computer program product **113'** for running on a computing device **110** (FIG. **1B****)** comprising a data processor **112** (FIG. **1B****),** for detecting in image data **121** (FIG. **1B****)** a lying position **128** (FIG. **1B****)** of a person **102** (FIG. **1B****)** in bed **103** (FIG. **1B****)** In FIG. **4A** at block **301,** the computer program product **113'** comprising: a first machine learning model **114** (FIG. **1B****)** trained for detecting a bed **103** (FIG. **1B****)** in image data **121** (FIG. **1B****)** as a bed area **124** (FIG. **1B****)** In FIG. **4A** at block **302',** the computer program product **113'** comprising: a second machine learning model **116** (FIG. **1B****)** trained for detecting a rotating position **126** (FIG. **1B****)** of a person **102** (FIG. **1B****)** in the bed area **124** (FIG. **1B****)** that is transposed in a predefined position **123** (FIG. **1B****)**
In FIG. **4A** at block **302",** the computer program product **113'** comprising: a third machine learning model **117** (FIG. **1B****)** trained for detecting an orientation position **127** (FIG. **1B****)** of a bed **103** (FIG. **1B****)** in the bed area **124** (FIG. **1B****)** that is transposed in a predefined position **123** (FIG. **1B****)**

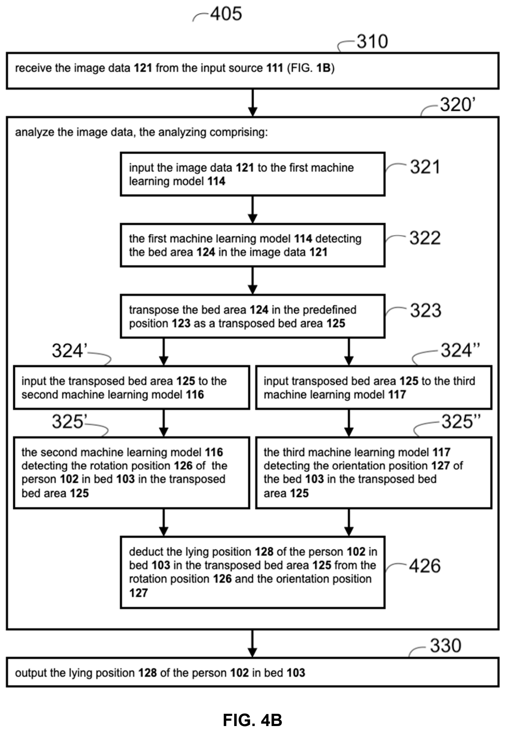

FIG. **4B** schematically depicts in flowchart **405** an embodiment of the computer program product **113',** wherein the computer program product **113'** when running on the data processor **112** causes the computing device **110** to execute the operations in the blocks **310, 320'** including **321-323, 324', 324", 325', 325", 426,** and **330.** In FIG. **4B** at block **310,** the computer program product **113'** when running on the data processor **112** causes the computing device **110** to receive the image data **121** from an input source **111** (FIG. **1B****)**
In FIG. **4B** at block **320',** the computer program product **113'** when running on the data processor **112** causes the computing device **110** to analyze the image data **121,** the analyzing comprising the operations in the blocks **321-323, 324', 324", 325', 325",** and **426.**

In FIG. **4B** at block **321,** the analyzing comprising: input the image data **121** to the first machine learning model **114.**

In FIG. **4B** at block **322,** the analyzing comprising: the first machine learning model **114** detecting the bed area **124** in the image data **121.**

In FIG. **4B** at block **323,** the analyzing comprising: transpose the bed area **124** in the predefined position **123** as a transposed bed area **125.**

In FIG. **4B** at block **324',** the analyzing comprising: input the transposed bed area **125** to the second machine learning model **116.**

In FIG. **4B** at block **324",** the analyzing comprising: input the transposed bed area **125** to the third machine learning model **117.**

In FIG. **4B** at block **325',** the analyzing comprising: the second machine learning model **116** detecting the rotating position **126** of the person **102** in bed **103** in the transposed bed area **125.**

In FIG. **4B** at block **325",** the analyzing comprising: the third machine learning model **117** detecting the orientation position **127** of the bed **103** in the transposed bed area **125.**

In FIG. **4B** at block **426,** the analyzing comprising: deduct the lying position **128** of the person **102** in bed **103** in the transposed bed area **125** from the rotation position **126** and the orientation position **127.**

In FIG. **4B** at block **330,** the computer program product **113'** when running on the data processor **112** causes the computing device **110** to output the lying position **128** of the person **102** in bed **103.**

In a further embodiment of the computer program product **113',** the lying position **128** of the person **102** is categorized into three categories: person-lying-on-their-back, person-lying-on-their-left-side, and person-lying-on-their-right-side.

In a further embodiment of the computer program product **113',** the transposed bed area **125** is either the bed area **124** rotated in a horizontal position **123** or a vertical position **123.**

In a further embodiment of the computer program product **113',** the computer program product **113'** is running on a on a computing device that is part of an image-capturing sensor.

In a furthermore embodiment of the computer program product **113',** the computer program product **113'**
when running on the data processor **112** in addition causes the computing device **110** to:
   - store an occurrence of a first output of the lying position **128** with a timestamp;
   - measure, with time intervals, the time elapsed since the timestamp as a duration;
   - output a signal when the duration exceeds a predefined threshold, and
when an occurrence of a subsequent output of the lying position **128** differs from the first output of the lying position **128:**
   - store the occurrence of the subsequent output of the lying position **128,** and
   - reset the timestamp to the time of the occurrence of the subsequent output.

Embodiments of computer program products **113** and **113'** may include one or more operations, functions, or actions as illustrated by one or more of blocks in block diagram **300** (FIG. **3A****),** flowchart **305** (FIG. **3B****),** and block diagram **400** (FIG. **4A****),** flowchart **405** (FIG. **4B****),** respectively. Although the blocks are illustrated in a sequential order, these blocks may in some instances be performed in parallel. Also, the various blocks may be combined into fewer blocks, divided into additional blocks, and/or removed based on the desired implementation.

For the sake of example, the processes as illustrated in block diagrams **300** (FIG. **3A****)** and **400** (FIG. **4A****),** and in flowcharts **305** (FIG. **3B****)** and **405** (FIG. **4B****)** have been described as implemented by a computer program product, and may represent a circuitry that is wired to perform the specific logical functions in the processes.

These processes can also be described as implemented by a cloud service or computing device, as the computing device and the computer program product may be part of the cloud service. Therefore, the terms "computer device", "computing device", "computer system", "computer program product", "cloud" and "cloud service" can be interchangeable herein. It should be understood that other entities or combinations of entities can implement one or more steps of the processes.

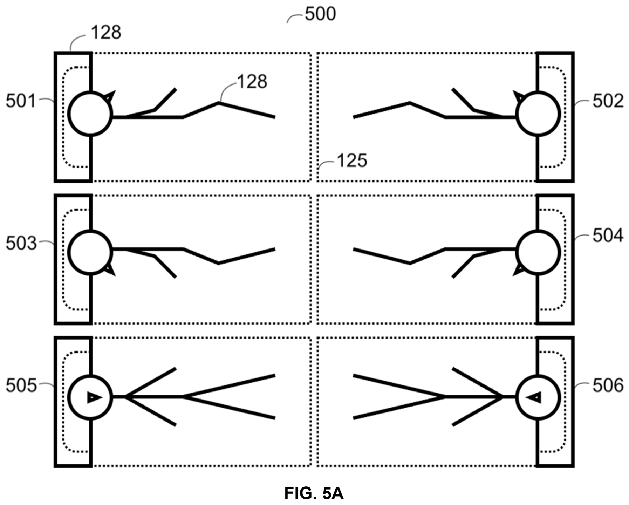

FIGS **5A-5C** schematically depict various embodiments of AI categorization of a lying position **128** of a person **102** (FIG. **1A****)** in bed **103** (FIG. **1A****),** a rotation position **126** of a person in bed, and an orientation position **127** of a bed **103,** in a transposed bed area **125.**

FIG. **5A** schematically depicts an embodiment **500** of AI categorization by a machine learning model **118** (FIG. **1A****)** trained for detecting a lying position **128** of a person **102** in the transposed bed area **125.**

In FIG. **5A** at block **501,** the AI categorization by the machine learning model **118,** categorizes the lying position **128** of the person **102** in the transposed bed area **125** in class **person-lying-on-their-left-side,** since the lying position **128** of the person **102** is facing up and person's head is oriented toward the left side, or alternatively person's feet are orientated toward the right side.

In FIG. **5A** at block **502,** the AI categorization by the machine learning model **118,** categorizes the lying position **128** of the person **102** in the transposed bed area **125** in class **person-lying-on-their-right-side,** since the lying position **128** of the person **102** is facing up and person's head is oriented toward the right side, or alternatively person's feet are orientated toward the left side.

In FIG. **5A** at block **503,** the AI categorization by the machine learning model **118,** categorizes the lying position **128** of the person **102** in the transposed bed area **125** in class **person-lying-on-their-right-side,** since the lying position **128** of the person **102** is facing down and person's head is oriented toward the left side, or alternatively person's feet are orientated toward the right side.

In FIG. **5A** at block **504,** the AI categorization by the machine learning model **118,** categorizes the lying position **128** of the person **102** in the transposed bed area **125** in class **person-lying-on-their-left-side,** since the lying position **128** of the person **102** is facing down and person's head is oriented toward the right side, or alternatively person's feet are orientated toward the left side.

In FIG. **5A** at block **505,** the AI categorization by the machine learning model **118,** categorizes the lying position **128** of the person **102** in the transposed bed area **125** in class **person-lying-on-their-back,** since the lying position **128** of the person **102** is on back or alternatively neither facing up nor facing down. An additional categorization can be that person's head is oriented toward the left side, or alternatively person's feet are orientated toward the right side.

In FIG. **5A** at block **506,** the AI categorization by the machine learning model **118,** categorizes the lying position **128** of the person **102** in the transposed bed area **125** in class **person-lying-on-their-back,** since the lying position **128** of the person **102** is on back or alternatively neither facing up or facing down. An additional categorization can be that person's head is oriented toward the right side, or alternatively person's feet are orientated toward the left side.

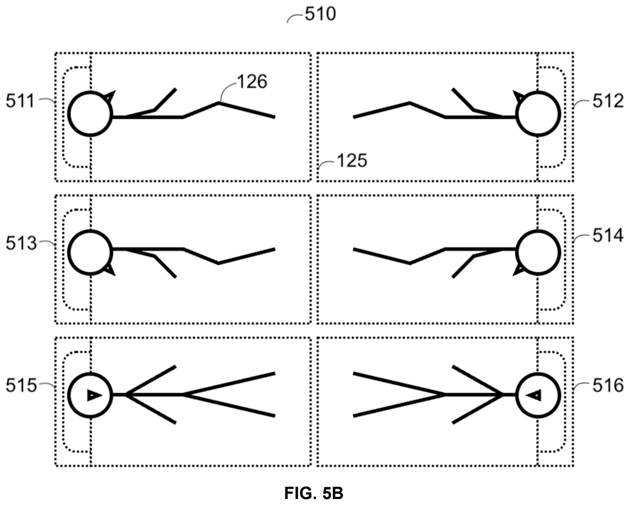

FIG. **5B** schematically depicts an embodiment **510** of AI categorization by a machine learning model **116** (FIG. **1B****)** trained for detecting a rotation position **126** of a person **102** in the transposed bed area **125.**

In FIG. **5B** at block **511,** the AI categorization by the machine learning model **116,** categorizes the rotation position **126** of the person **102** in the transposed bed area **125** in class **person-facing-up,** since the rotation position **126** of the person **102** is facing up.

In FIG. **5B** at block **512,** the AI categorization by the machine learning model **116,** categorizes the rotation position **126** of the person **102** in the transposed bed area **125** in class **person-facing-up,** since the rotation position **126** of the person **102** is facing up.

In FIG. **5B** at block **513,** the AI categorization by the machine learning model **116,** categorizes the rotation position **126** of the person **102** in the transposed bed area **125** in class **person-facing-down,** since the rotation position **126** of the person **102** is facing down.

In FIG. **5B** at block **514,** the AI categorization by the machine learning model **116,** categorizes the rotation position **126** of the person **102** in the transposed bed area **125** in class **person-facing-down,** since the rotation position **126** of the person **102** is facing down.

In FIG. **5B** at block **515,** the AI categorization by the machine learning model **116,** categorizes the rotation position **126** of the person **102** in the transposed bed area **125** in class **person-on-back,** since the rotation position **126** of the person **102** is on back or alternatively neither facing up nor facing down. down.

In FIG. **5B** at block **516,** the AI categorization by the machine learning model **116,** categorizes the rotation position **126** of the person **102** in the transposed bed area **125** in class **person-on-back,** since the rotation position **126** of the person **102** is on back or alternatively neither facing up nor facing down. down.

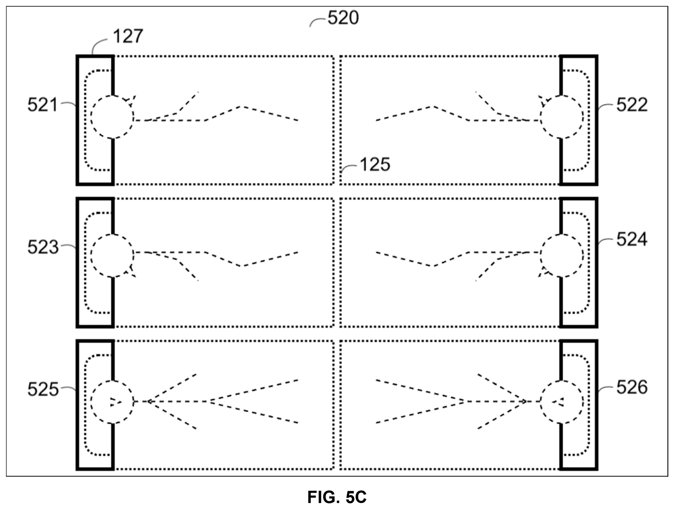

FIG. **5C** schematically depicts an embodiment **520** of AI categorization by a machine learning model **117** (FIG. **1B****)** trained for detecting an orientation position **127** of a bed **103** in a transposed bed area **125.**In FIG. **5C** at block **521,** the AI categorization by the machine learning model **117,** categorizes the orientation position **127** of the bed **102** in the transposed bed area **125** in class **headboard-oriented-toward-the-left,** since the top of bed **103** is oriented toward the left.

In FIG. **5C** at block **522,** the AI categorization by the machine learning model **117,** categorizes the orientation position **127** of the bed **102** in the transposed bed area **125** in class **headboard-oriented-toward-the-right,** since the top of bed **103** is oriented toward the right.

In FIG. **5C** at block **523,** the AI categorization by the machine learning model **117,** categorizes the orientation position **127** of the bed **102** in the transposed bed area **125** in class **headboard-oriented-toward-the-left,** since the top of bed **103** is oriented toward the left.

In FIG. **5C** at block **524,** the AI categorization by the machine learning model **117,** categorizes the orientation position **127** of the bed **102** in the transposed bed area **125** in class **headboard-oriented-toward-the-right,** since the top of bed **103** is oriented toward the right.

In FIG. **5C** at block **525,** the AI categorization by the machine learning model **117,** categorizes the orientation position **127** of the bed **102** in the transposed bed area **125** in class **headboard-oriented-toward-the-left,** since the top of bed **103** is oriented toward the left.

In FIG. **5C** at block **526,** the AI categorization by the machine learning model **117,** categorizes the orientation position **127** of the bed **102** in the transposed bed area **125** in class **headboard-oriented-toward-the-right,** since the top of bed **103** is oriented toward the right.

In a further embodiment of the AI categorization by the machine learning the model **117,** the orientation position **127** of the bed **102** in the transposed bed area **125** is set by the end of the bed.

An AI categorization by a machine learning model **117** leads to an incorrect deduction **426** (FIG. **4B****)** of a lying position **128** of a person **102** in bed **103** when the person **102** is lying with their feet to the headboard when the orientation position **127** of the bed **102** is set by the headboard. Nevertheless, this deficiency can be taken for granted when an occurrence of a person lying in the opposite or wrong direction is rare; e.g. in hospitals, patients would normally be lying with their head oriented toward the top of the bed.

## Claims

1. A method for detecting in an image a lying position of a person in a lying area with a computing device, the computing device comprising:
an input source;
a data processor, and
a computer program product comprising:
- a first machine learning model trained for detecting a lying area in image data, and
- a second machine learning model trained for detecting a lying position of a person in the lying area that is transposed in a predefined position,
wherein the computer program product when running on the data processor causes the computing device to:
- retrieve the image from the input source as image data;
- analyze the image data, the analyzing comprising:
• input the image data to the first machine learning model;
• the first machine learning model detecting the lying area in the image data;
• transpose the lying area in the predefined position as a transposed lying area;
• input the transposed lying area to the second machine learning model;
• the second machine learning model detecting the lying position of the person in the lying area in the transposed bed area, and
- output the lying position of the person in the lying area.

2. The method according to claim 1, wherein the lying position of the person in the lying area is categorized into three categories: person-lying-on-their-back, person-lying-on-their-left-side, and person-lying-on-their-right-side.

3. The method according to claim 1 or 2, wherein the transposed lying area is either the lying area rotated in a horizontal position or vertical position.

4. The method according to any one of the preceding claims, wherein the lying area is selected from a bed in a bed area, a couch in a couch area, a carpet in a carpet area, and a part of a floor in a floor area.

5. The method according to any one of the preceding claims, wherein the computer program product when running on the data processor in addition causes the computing device to:
- store an occurrence of a first output of the lying position with a timestamp;
- measure, with time intervals, the time elapsed since the timestamp as a duration;
- output a signal when the duration exceeds a predefined threshold, and
when an occurrence of a subsequent output of the lying position differs from the first output of the lying position:
- store the occurrence of the subsequent output of the lying position, and
- reset the timestamp to the time of the occurrence of the subsequent output.

6. A device configured to detect a lying position of a person in a lying area, the device comprising a common housing holding:
an image-capturing sensor outputting image data;
a computing device comprising a data processor, and
a computer program product comprising:
- a first machine learning model trained for detecting a lying area in image data, and
- a second machine learning model trained for detecting a lying position of a person in the lying area that is transposed in a predefined position,
wherein the computer program product when running on the data processor causes the computing device to:
- receive the image data from the image-capturing sensor;
- analyze the image data, the analyzing comprising:
• input the image data to the first machine learning model;
• the first machine learning model detecting the lying area in the image data;
• transpose the lying area in the predefined position as a transposed lying area;
• input the transposed lying area to the second machine learning model;
• the second machine learning model detecting the lying position of the person in the lying area in the transposed lying area, and
- output the lying position of the person in the lying area.

7. The device according to claim 6, wherein the lying position of the person is categorized into three categories:
person-lying-on-their-back, person-lying-on-their-left-side, and person-lying-on-their-right-side.

8. The device according to claim 6 or 7, wherein the transposed lying area is either the lying area rotated in a horizontal position or vertical position.

9. The device according to any one of the preceding claims 6-8, wherein the lying area is selected from a bed in a bed area, a couch in a couch area, a carpet in a carpet area, and a part of a floor in a floor area.

10. The device according to any one of the preceding claims 6-9, wherein the computer program product when running on the data processor in addition causes the computing device to:
- store an occurrence of a first output of the lying position with a timestamp;
- measure, with time intervals, the time elapsed since the timestamp as a duration;
- output a signal when the duration exceeds a predefined threshold, and
when an occurrence of a subsequent output of the lying position differs from the first output of the lying position:
- store the occurrence of the subsequent output of the lying position, and
- reset the timestamp to the time of the occurrence of the subsequent output.

11. A computer program product for running on a computing device comprising a data processor, for detecting in image data a lying position of a person in a lying area, the computer program product comprising:
a first machine learning model trained for detecting a lying area in image data,
a second machine learning model trained for detecting a rotation position of a person in the lying area that is transposed in a predefined position, and
a third machine learning model trained for detecting an orientation position of a lying area that is transposed in a predefined position,
wherein the computer program product when running on the data processor causes the computing device to:
- receive the image data from an input source;
- analyze the image data, the analyzing comprising:
• input the image data to the first machine learning model;
• the first machine learning model detecting the lying area in the image data;
• transpose the lying area in the predefined position as a transposed lying area;
• input the transposed lying area to the second machine learning model;
• the second machine learning model detecting the rotation position of the person in the lying area in the transposed lying area;
• input the transposed lying area to the third machine learning model;
• the third machine learning model detecting the orientation position of the lying area in the transposed lying area;
• deduct the lying position of the person in the lying area in the transposed lying area from the rotation position and the orientation position, and
- output the lying position of the person in the lying area.

12. The computer program product according to claim 11, wherein the lying position of the person is categorized into three categories: person-lying-on-their-back, person-lying-on-their-left-side, and person-lying-on-their-right-side, and/or wherein the transposed lying area is either the lying area rotated in a horizontal position or vertical position.

13. The computer program product according to any one of the preceding claims 11-12, wherein the lying area is selected from a bed in a bed area, a couch in a couch area, a carpet in a carpet area, and a part of a floor in a floor area.

14. The computer program product according to any one of the preceding claims 11-13, wherein the computer program product when running on the data processor in addition causes the computing device to:
- store an occurrence of a first output of the lying position with a timestamp;
- measure, with time intervals, the time elapsed since the timestamp as a duration;
- output a signal when the duration exceeds a predefined threshold, and
when an occurrence of a subsequent output of the lying position differs from the first output of the lying position:
- store the occurrence of the subsequent output of the lying position, and
- reset the timestamp to the time of the occurrence of the subsequent output.

15. The computer program product according to any one of the preceding claims 11-14 13, wherein the computer program product is running on a computing device that is part of an image-capturing sensor.
